# EUROPÄISCHE PATENTSCHRIFT

(11) **EP 1 110 766 B1**
(45) Veröffentlichungstag und Bekanntmachung des Hinweises auf die Patenterteilung: **27.08.2003**
(21) Anmeldenummer: 00127486.9
(22) Anmeldetag: 14.12.2000
(51) Int. Cl.: B60G 7/02, B62D 21/11, B60P 3/22

(54) **Chassiskonstruktion**
Frame construction
Construction d'un chassis

(30) Priorität: 17.12.1999 DE 29922269 U
(43) Veröffentlichungstag der Anmeldung: 27.06.2001
(73) Patentinhaber: Feldbinder & Beckmann Fahrzeugbau GmbH & Co. KG, 21423 Winsen/Luhe (DE)
(72) Erfinder: Beckmann, Jan-Dirk, 21423 Winsen/Luhe (DE); Feldbinder, Otto, 29643 Neuenkirchen (DE)
(74) Vertreter: Gerbaulet, Hannes, Dipl.-Ing.

(56) Entgegenhaltungen:
- EP-A- 0 162 511
- FR-A- 1 445 694
- US-A- 2 078 939
- US-A- 2 636 743
- US-A- 2 901 240
- US-A- 3 163 435
- US-A- 3 742 866
- Baumusterzeichnungen der Fa. GoFA (Zeichnung Nr. 10429 C, 201 0015-0, 201-0029-0)

## Beschreibung

Die Erfindung betrifft eine Chassiskonstruktion für Fahrzeuge mit nicht angetriebenen Rädern, die Chassisträger mit einer Unterseite, die von einer zu transportierenden Last abgewandt ist, sowie an zugeordneten Chassisträgern befestigte Achsböcke aufweist, wobei die Achsböcke an der Unterseite des zugeordneten Chassisträgers befestigt sind, wie sie aus der gattungsgemäßen US-A-3,169,435 bekannt ist.

Eine ähnliche Chassiskonstruktion ist aus der DE 27 43 418 C3 bereits bekannt. Diese offenbarte Chassiskonstruktion verfügt über einen als Flanschverbindung ausgestalteten Achsbock, der rechtwinklig an einem Tragrohr einer Fahrzeugachse befestigt ist. Chassisträger und Achsblock sind Z-förmig ausgestaltet und weisen neben einer Seitenwandung einen Obergurt sowie einen Untergurt auf. Zum Einfügen des Tragrohres ist in dem Chassisträger eine Aussparungen vorgesehen, in deren Bereich der Achsbock mit der Seitenwandung des Chassisträgers verschraubt ist. Um ein Ausschlagen der dazu notwendigen Schraublöcher zu vermeiden, überbrückt der Untergurt des Achsbocks die Aussparung und ist mit seinen Endbereichen am Untergurt des Chassisträgers befestigt. Die Z-Profilierung des Chassisträgers ist jedoch in der Herstellung aufwendig und verursacht hohe Kosten. Weiterhin wird die Stabilität des Chassisträgers durch die Aussparung zum Einführen des Tragrohres verringert.

Mit der EP-A-0 162 511 ist ein Frachtfahrzeug mit einem Chassis und einem mit dem Chassis verbundenen Achsunteraufbau bekannt geworden, wobei der Achsunteraufbau einen zusätzlichen Hilfsrahmen mit einem Querträger aufweist.

Der Erfindung liegt die Aufgabe zugrunde, bei einer Chassiskonstruktion der eingangs genannten Art eine aufwendige Herstellung mit hohen Kosten zu vermeiden und gleichzeitig eine ausreichend hohe Stabilität des Chassisträgers auch bei lang andauernder Verwendung der Chassiskonstruktion zu gewährleisten.

Diese Aufgabe wird durch die im Anspruch 1 angegebenen Merkmale gelöst.

Durch die Anbindung des Achsbocks an der Unterseite des Chassisträgers wird das Auftreten von Scherkräften durch die in senkrechter Richtung wirkenden hohen Lastkräfte an Verbindungsstellen zwischen dem Achsbock und dem Chassisträger im Wesentlichen vermieden. Weiterhin entfällt die Notwendigkeit an den Chassisträgern kostenintensive Z-Profilierungen oder Aussparungen vorzusehen, so dass die Stabilität der Chassiskonstruktion auch über längere Nutzungszeiten erhalten bleibt.

Vorteilhafte Ausgestaltungen der Erfindung sind in den Unteransprüchen gekennzeichnet.

Durch die Ausgestaltung des Chassisträgers als Profilrohr mit Verstärkungsprofil gemäß Patentanspruch 2 wird erreicht, dass ein für die jeweilige Anwendung ausreichend hohes Widerstandsmoment und gleichzeitig ein möglichst geringes Eigengewicht des Chassisträgers verwirklicht werden kann. Die Profilierung des Verstärkungsprofils bewirkt darüber hinaus, dass die Schweißnaht zwischen dem Verstärkungsprofil und dem Profilrohr nicht in einer Randfaser des Profilrohres verläuft. Ferner ist die Anbindung des Achsbocks an den Chassisträger durch die Profilverstärkung verbessert.

Durch das in Patentanspruch 3 angegebene Vorsehen jeweils einer Aufnahmenut an den Achsböcken, die zu dem zugeordneten Chassisträger passend ausgestaltet und mit diesem formschlüssig verschweißt sind, werden auftretende Kräfte nicht nur über die Schweißnaht, sondern auch durch den Formschluß zwischen Achsbock und Chassisträger übertragen. Ferner verläuft die Schweißnaht des Achsbockes nicht in der Randfaser des Chassisträgers. Auch vereinfacht die formschlüssige Ausgestaltung von Achsbock und Chassisträger die Montage der Chassiskonstruktion.

Durch den in Patentanspruch 4 angegebenen Stützkasten, der sich über die Anbindungsstelle des Achsbocks an dem Chassisträger hinweg bis zum Achsbock erstreckt, wird erreicht, dass der Stützkasten im unteren Bereich eine große Schweißnahtlänge aufweist, wobei ferner vermieden ist, dass eine Schweißnaht zur Verbindung des Stützkastens mit dem Chassisträger und dem Achsbock im Bereich höchster Spannungen endet.

Ausführungsbeispiele der Erfindung werden nachstehend anhand der Zeichnung näher erläutert. Es zeigen:
- Fig.1: eine Seitenansicht eines Ausführungsbeispiels der erfindungsgemäßen Chassiskonstruktion,
- Fig. 2: eine vergrößerte Seitenansicht einer Chassiskonstruktion gemäß Fig. 1 und
- Fig. 3: eine vergrößerte Vorderansicht einer Chassiskonstruktion gemäß Fig. 1.

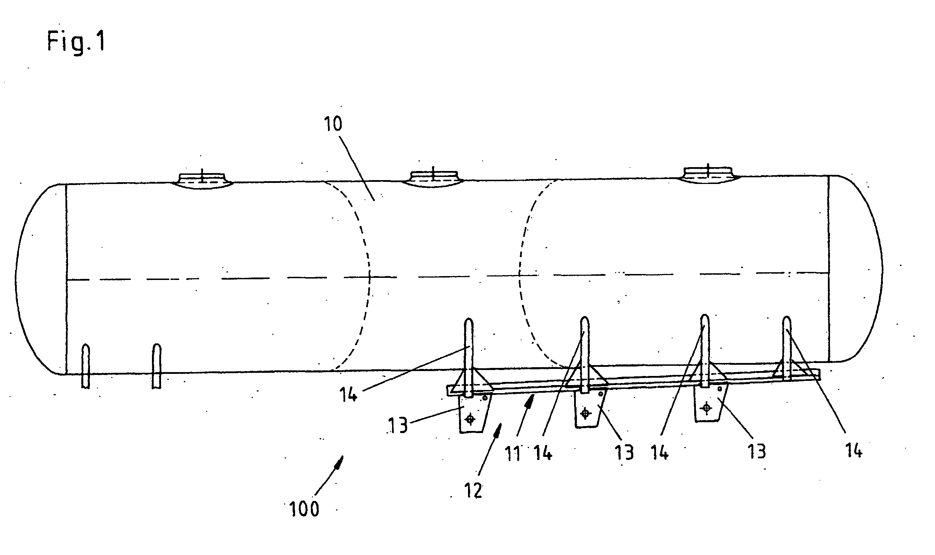

Fig. 1 zeigt ein Ausführungsbeispiel der erfindungsgemäßen Chassiskonstruktion 100 zum Transport einer Last 10 in einer Seitenansicht. Die Chassiskonstruktion 100 weist ein Traggerüst aus miteinander verbundenen Chassisträgern 11 auf. An einer Unterseite 12 des in Fig.1 erkennbaren Chassisträgers 11 sind Achsböcke 13 vorgesehen, die zur Aufnahme einer nicht gezeigten Fahrzeugachse eingerichtet sind. Zum seitlichen Abstützen der Last 10 weist die Chassiskonstruktion 100 weiterhin Stützkästen 14 auf, die sich zum Teil von der Last 10 über einen Verbindungsbereich zwischen einem Achsbock 13 und dem Chassisträger 11 hinweg erstrecken.

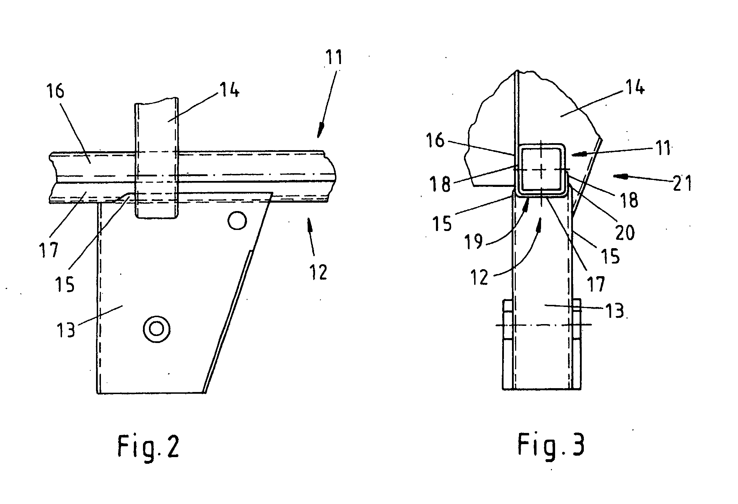

Fig. 2 zeigt die Anbindung eines Achsbocks 13 an die Unterseite 12 eines Chassisträgers 11 im Detail. Der Achsbock 13 verfügt über Seitenwandungen 15, die mit dem Chassisträger 11 seitlich überlappen.

Fig. 3 zeigt die Anbindung des Achsbocks gemäß Fig. 2 in einer Vorderansicht. Es ist erkennbar, dass der Chassisträger 11 aus einem Profilrohr 16 und einem an seiner Unterseite 12 angeordneten Verstärkungsprofil 17 zusammengesetzt ist, wobei das Verstärkungsprofil 17 durch Profilschweißnähte 18 an dem Profilrohr 16 befestigt ist. Wandstärke und Material des Verstärkungsprofils 17 und des Profilrohres 16 wurden so aufeinander abgestimmt, dass der Chassisträger 11 ein für den gewünschten Verwendungszweck ausreichend hohes Widerstandsmoment sowie ein möglichst geringes Eigengewicht aufweist.

Durch die seitliche Überlappung der Seitenwandungen 15 des Achsbocks 13 mit dem Chassisträger 11 ist ferner eine zum Chassisträger 11 passend ausgebildete Aufnahmenut 19 ausgebildet, in der der Chassisträger 11 angeordnet und an seinem Verstärkungsprofil 17 durch Schweißnähte 20 verschweißt ist. Auf diese Weise werden einwirkende Kräfte nicht nur über die Schweißnacht 20, sondern auch durch den Formschluss zwischen Achsbock 13 und Chassisträger 11 übertragen.

Der Stützkasten 14 erstreckt sich mit seinem von der Last 10 abgewandten Endbereich 21 über den Überlappungsbereich zwischen Achsbock 13 und Chassisträger 11 hinweg und ist mit beiden Bauteilen durch eine nicht gezeigte Schweißnaht verbunden. Auf diese Weise ergibt sich eine im Hinblick auf die Stabilität vorteilhafte lange Schweißnaht im Endbereich 21 des Stützkastens 14, wobei vermieden ist, dass eine der Schweißnähte im Bereich höchster Spannungen, beispielsweise im Anbindungsbereich des Achsbocks 13, endet.

### Bezugszeichenliste

- Chassiskonstruktion: 100
- Last: 10
- Chassisträger: 11
- Unterseite des Chassisträgers: 12
- Achsbock: 13
- Stützkasten: 14
- Seitenwandung des Achsbocks: 15
- Profilrohr: 16
- Verstärkungsprofil: 17
- Profilschweißnaht: 18
- Aufnahmenut: 19
- Schweißnaht: 20
- Endbereich des Stützkastens: 21

## Patentansprüche

1. Chassiskonstruktion (100) für Fahrzeuge mit nicht angetriebenen Rädern, die Chassisträger (11) mit einer Unterseite (12), die von einer zu transportierenden Last (10) abgewandt ist, sowie an zugeordneten Chassisträgern befestigte Achsböcke (13) aufweist, wobei die Achsböcke (13) an der Unterseite (12) des zugeordneten Chassisträgers (11) befestigt sind,
**dadurch gekennzeichnet,**
**daß** die Chassisträger (11) Profilrohre (16) mit einem an deren Unterseite befestigten Verstärkungsprofil (17) sind.

2. Chassiskonstruktion gemäß Anspruch 1, **dadurch gekennzeichnet, daß** die Achsböcke (13) jeweils eine zu dem zugeordneten Chassisträger (11) passende ausgestaltete Aufnahmenut (18) aufweisen, wobei der zugeordnete Chassisträger (11) in der Aufnahmenut (18) angeordnet und mit dem Achsbock (13) verschweißt ist.

3. Chassiskonstruktion gemäß einem der vorhergehenden Ansprüche,
**dadurch gekennzeichnet, daß** äußere Stützkästen (14) vorgesehen sind, die sich über die Anbindungsstelle des Achsbocks (13) an dem Chassisträger (11) hinweg erstreckt.

## Claims

1. Chassis construction (100) for vehicles with non driven wheels, which has chassis supports (11) with a lower side (12) which is opposite to a load to be transported (10) as well as axle trestles fixed on associated chassis supports, whereby the axle trestles (13) are fixed on the lower side (12) of the associated chassis support (11),
**characterized in**
**that** the chassis supports (11) are special section tubes (16) with a reinforcement profile (17) fixed on their lower side.

2. Chassis construction according to claim 1, **characterized in that** the axle trestles (13) have a respective reception groove (18) configured adapted to the associated chassis support (11), whereby the associated chassis support (11) is placed in the reception groove (18) and is welded with the axle trestle (13).

3. Chassis construction according to any of the preceding claims, **characterized in that** outer supporting cases (14) are provided which extend over the binding point of the axle trestle (13) on the chassis support (11).

## Revendications

1. Construction de châssis (100) pour véhicules avec des roues non motrices qui présente des support de châssis (11) avec un côté inférieur (12) qui est détourné d'une charge à transporter (10) ainsi que des chevalets d'essieu (13) fixés aux supports de châssis associés, les chevalets d'essieu (13) étant fixés au côté inférieur (12) du support de châssis associé (11),
**caractérisée en ce**
**que** les supports de châssis (11) sont des tubes profilés (18) avec un profilé de renforcement (17) fixé sur leur côté inférieur.

2. Construction de châssis selon la revendication 1, **caractérisée en ce que** les chevalets d'essieu (13) présentent respectivement une gorge de logement (18) configurée adaptée au support de châssis assoce (11), le support de châssis associé (11) étant placé dans la gorge de logement (18) et étant soudé au chevalet d'essieu (13).

3. Construction de châssis selon l'une des revendications précédentes, **caractérisée en ce que** des caisses d'appui extérieures (14) sont prévues qui s'étendent au-delà du point de jonction du chevalet d'essieu (13) sur le support de châssis (11).
